# EUROPEAN PATENT APPLICATION

(11) **EP 4 659 555 A1**
(43) Date of publication of application: **10.12.2025**
(21) Application number: 24179917.0
(22) Date of filing: 04.06.2024
(51) Int. Cl.: A01C 3/02, A01K 1/015

(54) **SLURRY TANK AERATION SYSTEM**

(71) Applicant: Earls, Gary, Ballinasloe Galway (IE)
(72) Inventor: Earls, Gary, Ballinasloe Galway (IE)
(74) Representative: FRKelly

(57) **Abstract**

A slurry aeration system for a slatted floor slurry tank (102), comprising a clamp (203) for insertion between two slats (201) of the slatted floor (103), the clamp holding a proximal end of a pipe (303) with a distal end of the pipe extending into the tank, wherein the clamp includes an air inlet (504) connected to the proximal end of the pipe, and a mobile air tank (301, 802) unit configured to connect to the air inlet and deliver air to the pipe, the pipe being provided with an air outlet at the distal end of the pipe.

## Description

### Technical Field

This invention relates to an aeration system for agitating or mixing animal slurry tanks.

### Background Art

An animal slurry tank is a specialized container used to store, manage, and sometimes process a mixture of animal manure, water, and other organic materials, commonly referred to as slurry. These tanks are essential in agricultural operations for efficient waste management and nutrient recycling.

Below ground slurry tanks, also known as underfloor slatted stores/tanks, are commonly used for storing slurry underneath livestock housing or barns. They are usually positioned directly beneath the slatted floor area of barns or livestock housing, receiving the manure that falls through the slats from the animals housed above. The tank is typically constructed from concrete with slatted floors above to allow the manure to fall through into the tank below.

Below ground animal slurry tanks, particularly those located under barns, require effective agitation to manage the slurry properly. Agitation is crucial for maintaining a uniform consistency, preventing solids from settling, and ensuring that the slurry can be efficiently pumped out and used as fertilizer.

There are a number of methods of agitation including mechanical agitation with propellers or paddles, and hydraulic agitation using slurry recirculation pumps. However, aeration systems are becoming increasingly popular. These systems use rising air bubbles to mix and move the slurry, creating an aerobic environment without the need for mechanical agitation. As the air bubbles rise, oxygen is transferred from the air to the slurry. This oxygen is essential for aerobic bacteria, which break down organic matter in the slurry, reducing odours and converting harmful substances into less harmful ones. This system is energy-efficient and reduces the risk of harmful gas build up. In particular, such systems help maintain the slurry in a consistent state, reduce harmful emissions, and enhance the nutrient content, ultimately leading to cost savings and improved crop yields However, there are drawbacks to known aeration systems such as high energy and operating costs. Aeration systems require energy to operate pumps, aerators or blowers to supply oxygen, resulting in higher operating costs compared to anaerobic storage. The energy costs and labour requirements to keep a large volume of manure aerobic are high. Higher capital costs are also a consideration. Aerobic treatment requires installation of aeration equipment like aerators, blowers, pumps etc., resulting in higher capital costs compared to conventional storage tanks which are mixed with external mechanical means.

In particular, known aeration systems for animal slurry agitation typically require a significant amount of piping. An extensive network of piping is conventionally considered essential for distributing air throughout the slurry to ensure effective aeration and mixing. This network of piping can be quite extensive and in larger systems hundreds if not thousands of meters of piping may be needed. Conventional piping Installation and connection involves the following:
1. Base of the Tank:
   - The aeration pipes are typically attached to the base of the slurry tank or storage facility. This is done using industrial-strength screws and brackets to ensure the pipes are securely fixed in place for long-term use.
   - The pipes are usually made of durable materials such as 50mm Class D uPVC, which does not corrode or degrade over time.
2. Connection to Aeration Motor Unit:
   - After the pipes are installed at the base, they are connected to the aeration motor unit. This motor unit is responsible for pumping air through the pipes.
   - The motor unit is typically fitted and wired into the existing electrical system on the farm. Once connected, the motor unit can start pumping air into the slurry through the pipes.
3. Rotary Valve and Manifold System:
   - Many systems use a rotary valve that distributes air to different sections of the tank sequentially. The rotary valve is connected to a manifold, which then distributes the air through the network of pipes.
   - The rotary valve operates on a set schedule, ensuring that each section of the tank receives air for a specific period before moving to the next section.
4. Outlet Branches and Non-Return Valves:
   - Each supply pipe feeds into an outlet branch equipped with self-closing neoprene non-return outlet valves. These valves open when air is pumped in, allowing the air to be distributed evenly throughout the slurry
   - The outlet branches are strategically placed to ensure comprehensive coverage and effective mixing of the slurry.
5. Compressed Air Distribution:
   - Compressed air is piped up and over the side of the tank and then down to the tank floor via a symmetrical pattern of outlet branches. This setup ensures that air bubbles rise through the slurry, promoting effective mixing and aeration.

There is an increased desire to retrofit aeration systems to underfloor slatted stores/tanks. However, this is expensive and time consuming. The tank must be fully emptied and cleaned before installation. This involves removing all slurry, water, and any remaining silt or solids. It is crucial to test for harmful gases such as hydrogen sulphide, methane, ammonia, and carbon dioxide before anyone enters the tank. If high levels of these gases are detected, full breathing apparatuses need to be used by trained personnel. If necessary, structural adjustments such as reinstalling a concrete floor for fixing pipework may be required. This ensures that the pipework is securely attached and remains in place during operation.

There is a need for a system that addresses at least some of the aforementioned drawbacks of the known slurry tank aeration systems.

### Summary of the Invention

In an independent aspect of the present teachings, there is provided a slurry aeration system for a slatted floor slurry tank, comprising a clamp for insertion between two slats of the slatted floor, the clamp holding a proximal end of a pipe with a distal end of the pipe extending into the tank, wherein the clamp includes an air inlet connected to the proximal end of the pipe, and a mobile air tank unit configured to connect to the air inlet and deliver air to the pipe, the pipe being provided with an air outlet at the distal end of the pipe.

This system is much simpler than the known prior art systems in that it does not require long lengths of piping and related components to feed air to the slurry. Rather, the mobile air tank moves to the clamp holding the pipe and delivers the required volume of air.

In addition, this system is much easier to retrofit to existing slurry tanks than prior art slurry aeration systems. The slurry tank does not have to be emptied to fit this system and all installation can be done without entering the slurry tank. This is because the clamp and pipe can fit in the gap between two opposed slats.

The distal end of the pipe may have a T connection providing two air outlets. This provides improved slurry aeration compared to a single outlet.

The two air outlets may be provided with valve flaps to prevent slurry from entering the pipe. This prevents any blockages occurring by slurry entering the outlets.

Preferably, the clamp comprises a support member which is configured to span a distance between the two slats of the slatted floor. This support member allows to clamp to be suspended from the slatted floor.

Preferably the clamp further comprises an anchor attached to the clamp using a threaded rod. The clamp may be configured to move the anchor along the threaded rod to hold the two slats between the support member and the anchor. This ensures the clamp and corresponding pipe is held securely in place after installation.

Optionally the clamp includes a countersunk Allen bolt on the support member and connected to the threaded rod, wherein rotation of the Allen bold causes the anchor to move along the threaded rod. The countersunk Allen bolt minimises the profile of the clamp on the slatted floor.

The support member may be a flat plate, which also helps to maintain a low profile on the slatted profile.

Preferably the mobile air tank unit is an automated battery powered robotic unit. This means the robotic unit can automatically move to the clamp and provide air to the air inlet without any user involvement. The robotic unit may be programmed to periodically connect to the air inlet and deliver a predetermined volume of air. This ensures that the slurry in the tank is regularly aerated with minimal user input.

The system may further include a charging station at which the robotic unit can recharge. Preferably, the charging station includes a master air tank and the robotic unit is configured to periodically connect to the master air tank for refilling. This configuration minimises the amount of piping that is needed in the system.

Preferably the system comprises a plurality of clamps and the automated robotic unit is configured to periodically move to each clamp to connect to an air inlet at each clamp and deliver a predetermined volume of air thereto. This configuration ensures that the slurry throughout the entire tank can be mixed.

The robotic unit may be configured to follow a predetermined route between each of the plurality of clamps. The robotic unit may also be capable of machine learning to independent adapt the predetermined route for improved efficiency.

The clamp may be provided with a unique identifier that can be read by the robotic unit. This ensures that air is delivered to the correct clamp and corresponding pipe.

### Brief Description of the Drawings

The invention will be further illustrated by the following description of embodiments thereof, given by way of example only with reference to the accompanying drawings, in which:
Fig. 1 is a perspective view of a layout of a slatted floor barn containing banks of animal cubicles;
Fig. 2(a) is an enlarged view of a portion of the slatted floor of Fig. 1;
Fig. 2(b) shows the portion of the slatted floor of Fig. 2(a) with a clamp in accordance with the present teachings installed therein;
Fig. 3 is a perspective view of a portion of the band of Fig. 1 with clamps and corresponding pipes installed therein;
Fig. 4 shows an enlarged portion of Fig. 3;
Fig. 5 provides perspective views of the clamp and corresponding pipe in accordance with the present teachings;
Fig. 6 provides further perspective views of the clamp and corresponding pipe in accordance with the present teachings;
Fig. 7 shows a view of the clamp in accordance with the present teachings inserted between two slats; and
Fig. 8 is a plan view of the barn of Fig.1 showing a path that a robotic unit may take.

### Detailed Description

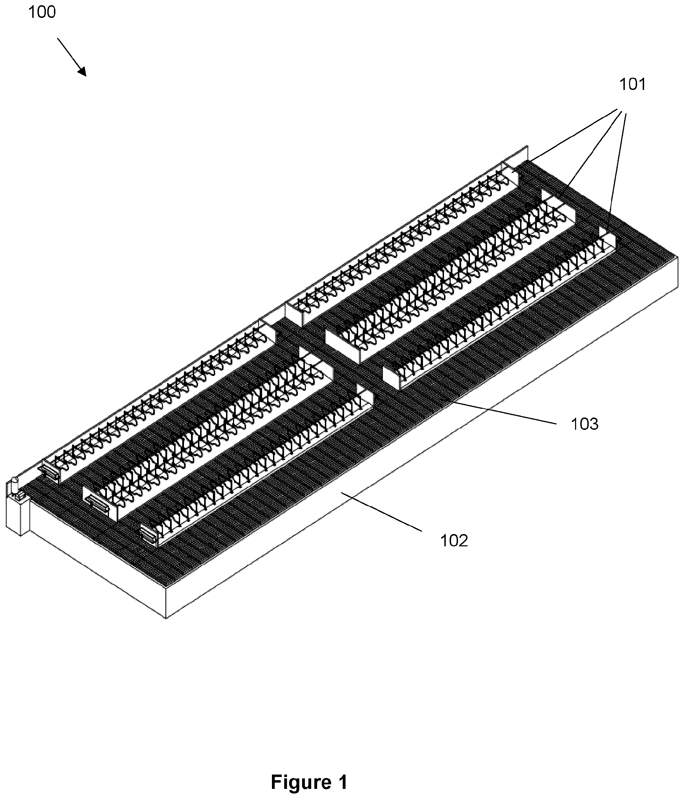

In Fig. 1 there is indicated, generally at 100, an animal barn layout containing rows of animal cubicle arranged in a plurality of cubicle banks 101. An underground slurry tank 102 is provided underneath the barn. The floor of the barn is slatted in a manner known in the art. That is, the upper floor of the slurry tank is provided with a slatted floor 103. The slatted floor 103 allows animal waste to pass there through into the slurry tank 102 below.

While the present teachings are generally described with reference to an underground slurry tank this should not be considered as limiting and the present teachings are also applicable to over ground tanks with slatted floors. In addition, while the exemplary barn described herein has animal cubicles therein the present teachings are not so limited. The barn may be open plan or divided into pens so that animals are allowed free movement within the barn/pens. The animals may lie directly on the slatted floor.

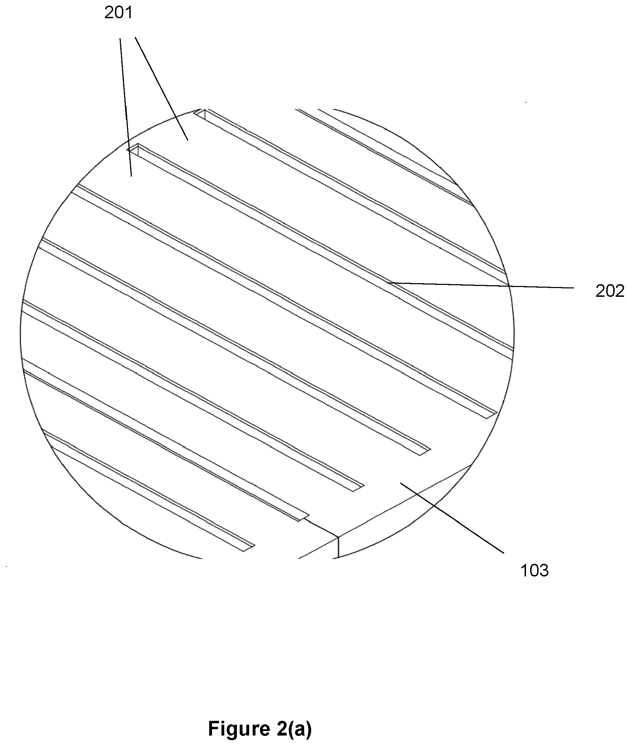

Referring to Fig. 2(a), an enlarged view of a portion of the slatted floor of the Fig. 1 is shown. It can be seen that the slatted floor 103 is provided with a plurality of slats 201 having a gap 202 between two opposing slats 201.

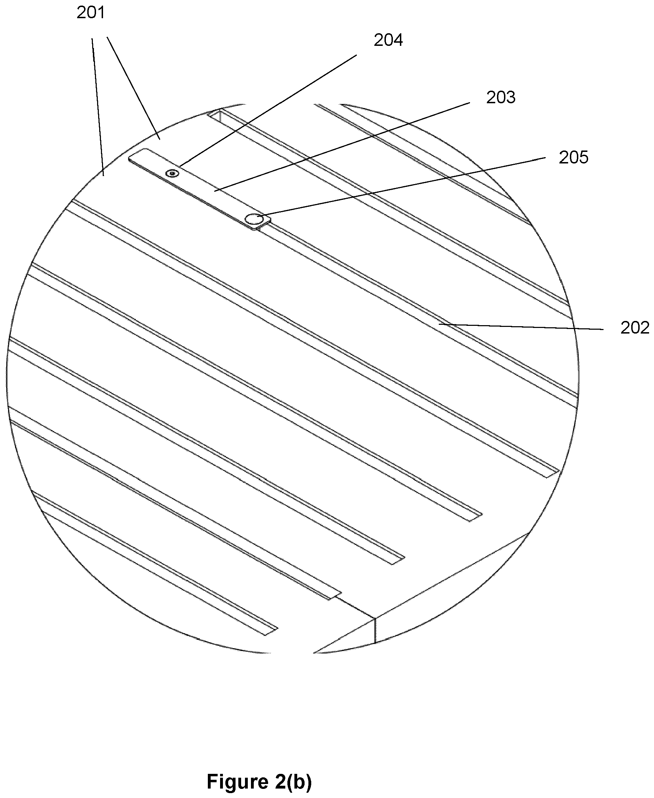

Referring to Fig. 2(b), the same enlarged view of the portion of the slatted floor 103 of the Fig. 1 is shown with a clamp 203 in accordance with the present teaching inserted in the gap 202. Only a support section (or upper section) of the clamp 203 is visible from above the slatted floor. In the preferred embodiment, the support section of the clamp is an elongated flat plate which is configured to span the width of the gap 202 or the space between the slats 201. It is important that the supporting of clamp keeps a minimal profile as this is the only part of the clamp 203 that is not below the level of the slatted floor 103. The low profile ensures that the clamp is not intrusive on the animal environment and minimises the chances of an animal injuring themselves on the clamp 203. Obstacles can impede the natural movement and behaviour of cows, leading to various issues related to their health, comfort, and productivity. The low profile or flat plate configuration of the support section of the clamp 203 ensures a safe environment that allows free movement, reduces animal stress/agitation, prevents injuries, and facilitates proper cleaning.

As will be explained in more detail herein after, the clamp 203 is configured to hold at least one pipe which extends into the slurry tank below the slatted floor. The clamp 203 is provided with an Allen head bolt 204 (also known as a Hex head bolt) to tighten the clamp 203 in place in the slatted floor. The head of the Allen head bolt 204 is preferably countersunk allowing a flush finish to be achieved on the top surface of the clamp. This ensures the aforementioned low profile of the clamp can be maintained.

As will be explained in more detail hereinafter a mobile air tank moves to the location of the clamp 203 and connects thereto in order to deliver air to the clamp which is forced, under pressure from the mobile air tank, down the pipe and into the slurry to provide aeration of the slurry in the tank. The mobile air tank may be a robotic unit and in such cases a reference object may be provided on the clamp 203. In order for the robotic unit to communicate with the clamp a non-metallic window 205 is provided on the clamp 203. The reference object aids the robotic unit to triangulate the position of an air inlet on the clamp 203 as will be explained in more detail hereinafter.

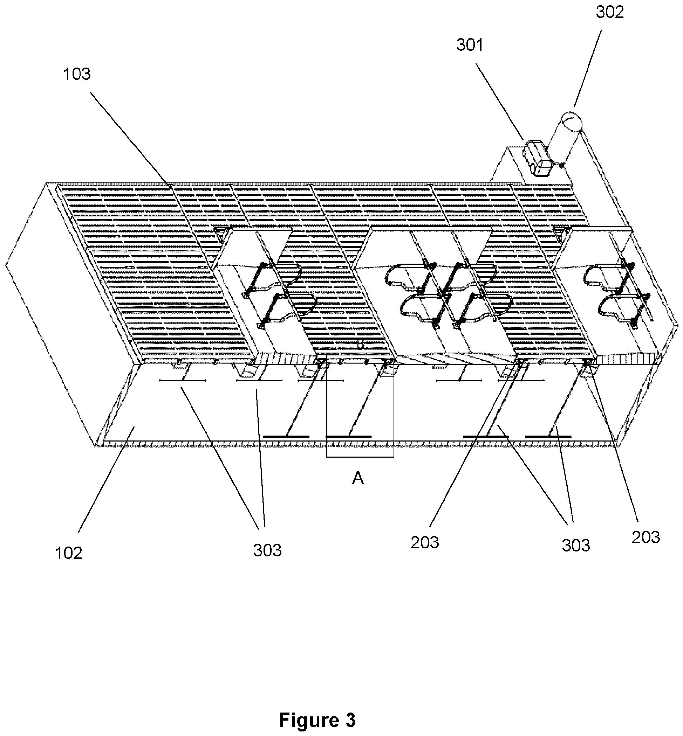

The complete slurry aeration system for a slatted floor slurry tank in accordance with the present teachings can be seen in Fig. 3. The aforementioned mobile air tank 301 can be seen parked at a recharging station. The recharging station is preferably positioned at a corner of the barn to avoid causing an obstacle for the animals in the barn. The mobile air tank is preferably battery powered and can recharge at the recharging station via contactless recharging (inductive recharging). However, it should be appreciated that the mobile air tank can also be configured to use conducive charging or any other known battery charging system. The charging station is also provided with a stationary air tank 302, which preferably has a larger air capacity than the capacity of the mobile air tank 301. The stationary air tank 302 is connected to a compressor which maintains the stationary tank full of air at a predetermined pressure. The mobile air tank 301 is configured to connect to the stationary air tank 302 in order to fill with air.

In Fig. 3 the pipes 303, which extend from the clamps 203 can be seen. In the system in accordance with the present teachings a plurality of clamps 203 with corresponding pipes 303 are provided throughout the slatted floor 103. That is, the clamps 203 are positioned at regular intervals in the slatted floor 103 such that a plurality of pipes 303 are provided at regular intervals extending into the slurry tank 102. It will be appreciated that the specific placement of the clamps 203 and pipes 303 can be chosen as appropriate based on the configuration of the barn 100 and/or slurry tank 102. In particular, the position of the walls of the slurry tank 102, which support the slatted floor 130, will be a consideration for the placement of the clamps 203 and pipes 303. Note that in Fig. 3 only the upper portion of the walls are shown for improved visibility. As previously mentioned, the mobile air tank 301 is configured to move from the charging station with a full air tank and to connect to the clamps 203 positioned in the slatted floor 103. A predetermined volume of air is delivered to each clamp 203 and corresponding pipe 303 which then exits from the bottom of the pipe (of distal end of the pipe) and into the slurry to provide the desired aeration to the slurry in the slurry tank 102.

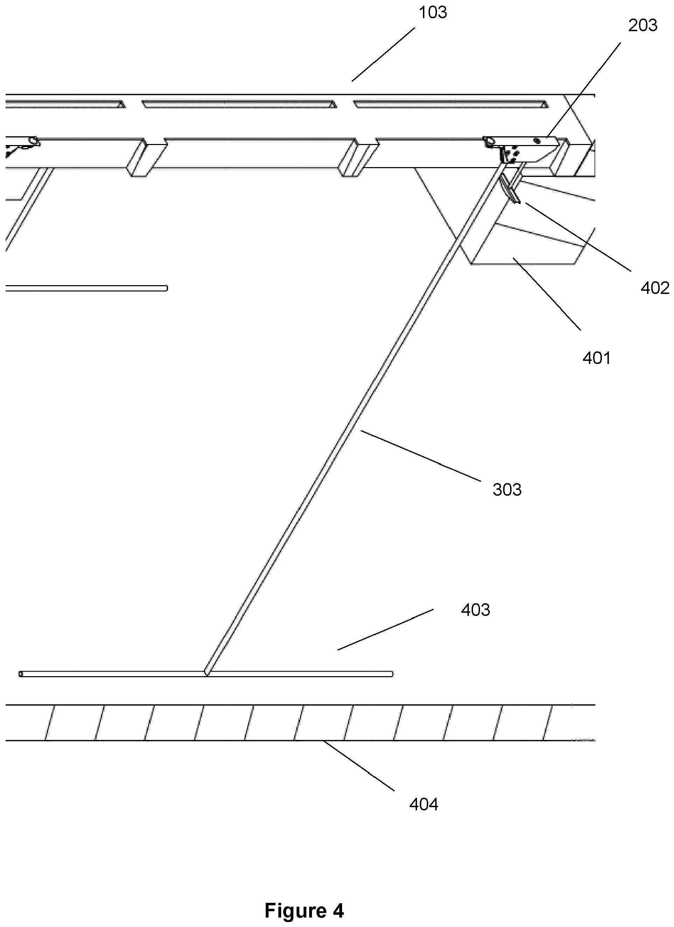

An enlarged portion A of Fig. 3 is shown in Fig. 4. In this enlarged portion the clamp 203 positioned in the slatted floor 103 can be seen more clearly. That is, the side profile of the clamp, which includes a section extending into the gap between two slats, can be seen. In addition, one of the two slats at each side of the clamp 203 has been removed for improved visibility. While the clamp 203 is shown positioned close to a wall 401 of the slurry tank this is not required and the clamp can be placed at any position between two slats in the slatted floor 103.

As will be explained in more detail hereinafter an anchor 402 is provided so that the clamp 203 may be held securely in place in the slatted floor. In particular, rotating the aforementioned hex bolt on the clamp draws the anchor 402 upwards or towards the support section of the clamp 203 which squeezes the two slats, between which the clamp is positioned, and hold this squeezing force holds the clamp 203 in place.

It can further be seen from Fig. 4 that the pipe 303 has a T shaped configuration at a distal end of the pipe 303 wherein the proximal end of the pipe is attached to the clamp 203. The T shaped configuration provides a distal section of pipe 403, which runs perpendicular to the vertical pipe 303 extending from the clamp 203. The pipe 303 is of such a length that the distal section of pipe 403 is positioned close to the bottom floor 404 of the slatted slurry tank 102 and horizontal to the bottom floor 404. This configuration has been found to provide the best results with respect to aeration of the slurry. However, it will be appreciated that the distal section of pipe 403 does not have to be positioned at or near the bottom of the slurry tank and the vertical pipe 303 extending from the clamp can be of any length.

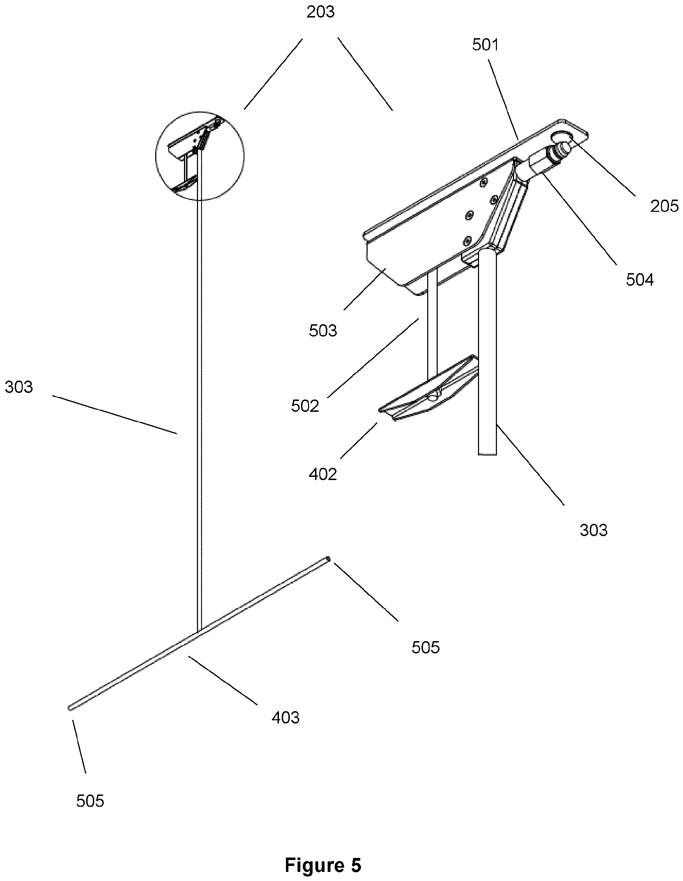

Turning to Fig. 5 this provides a more detailed view of the clamp 203 in accordance with the present teachings. As previously mentioned the clamp 203 is configured for insertion between two slats of a slatted floor. In Fig. 5 the clamp is ready for insertion with the anchor positioned co-linear with the support section 501 of the clamp 203. As previously mentioned the support section 501 may be an elongated flat plate but it is not limited to this configuration as long as it can suspend the clamp 203 by spanning the distance between two opposed slats. Anchor 402 is attached to the clamp 203 using a threaded rod 502. As will be explained in more detail after insertion of the clamp 203 between two opposed slats (while holding the pipe 303) the anchor 402 is rotated 90 degrees to be perpendicular to the lengthwise direction of the support section 501. The Allen head bolt 204 (not shown in Fig. 5) is rotated to squeeze the anchor 402 against the underside of the two opposed slats, which holds the clamp 203 in place.

It will be appreciated that the anchor 402 can have different configurations as long as it is sufficiently narrow in the lengthwise direction to fit between two opposed slats. As is known in the art, different gap sizes can be used for different slatted floors and the width of the anchor 402 as well as the width of the support section 501 may be configured accordingly. The width of the elongate support section 501 must always be wider than the width of the gap between two opposed slats so that it can span the gap and suspend the clamp therefrom.

An insertion section 503 of the clamp extends from the support section 501. The insertion section 503 is configured to occupy the space between two slats. In particular, the insertion section 503 must be of a sufficiently width to minimise any transverse movement of the clamp 203. A portion of the support section 501 on each side of the insertion section 503 sits on a respective slat. The insertion section 503 should be almost the same width of the gap to ensure that the clamp 203 cannot move sideways to such a degree that the aforementioned portion of the support section 501 is no longer sitting on a slat.

The insertion section 503 is configured to hold a proximal end of the pipe 303 (or a proximal end section of the pipe). In addition an air inlet 504 is provided on the clamp 203 and held in place by the insertion section 503. This ensures that the air inlet 504 is below the level of the support section 501. The air inlet 504 is connected to the proximal end of the pipe 303. The air inlet 504 may be a one way valve with a quick connect coupling so that the mobile air tank/robotic unit can seamlessly connect. However, the specific configuration of the air inlet 504 may be chosen by the person skilled in the art.

In the exemplary embodiment the insertion section 503 comprises two flat plates in parallel but any suitable configuration may be used that closely fits in the space between two opposed slats.

As previously mentioned, the clamp 203 is configured so that air which enters via the air inlet 504 is fed into the proximal end of the pipe 303 and exits from the distal end of the pipe 303. In the exemplary configuration two air outlets are provided at the distal end of the pipe 303 using the aforementioned T shape configuration. However, the skilled person will appreciate that any suitable number of outlets may be provided at the distal end using configurations other than the T shape configuration. For example, more than one distal section of pipe 403 may be used to provide more than two air outlets. Valve flaps 505 may be fitted to the air outlets at the distal end of pipe to prevent slurry from entering the pipe 303 (or a distal section of pipe 403) when compressed air is not being fed into the pipe 303 from the air inlet 504.

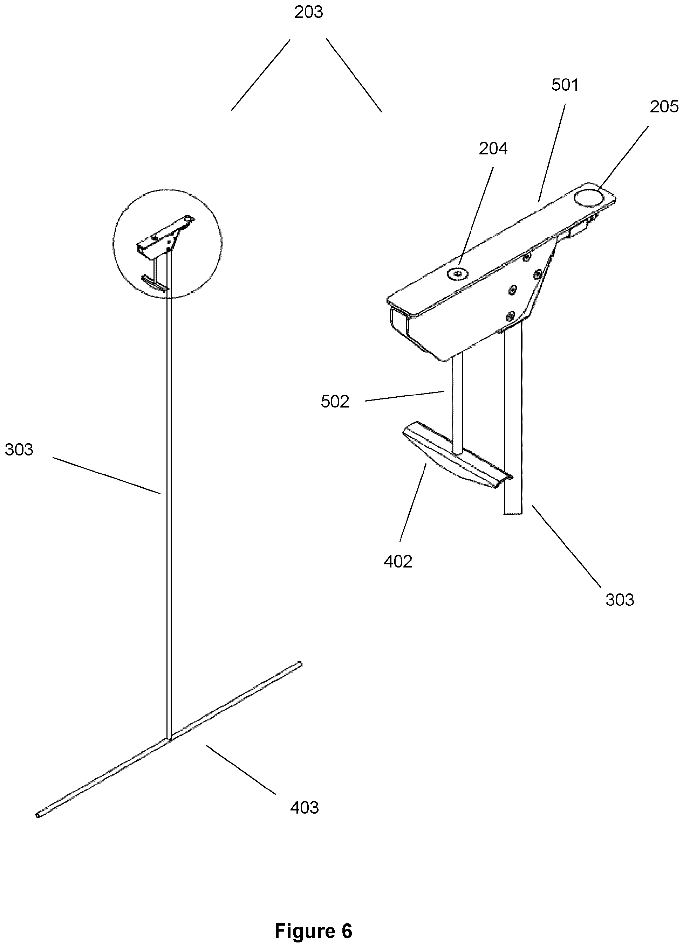

Turning to Fig. 6 this provides another view of the clamp 203 for use in the aeration system in accordance with the present teachings. In Fig. 6 the anchor 402 has been rotated 90 degrees so that it is perpendicular to the lengthwise direction of the support section 501. As previously mentioned the anchor 402 must be co-linear with the support section when the clamp 203, together with pipe 303 and anchor 402, is inserted between two slats. The anchor 402 is then rotated 90 degrees, the Allen bold is tightened to drawing the anchor 402 up the threaded rod 502 towards the support section. This action which applies a squeezing force to the slats between the support section 501 and anchor 402 and holds the clamp 203 with corresponding pipe 303 securely in place. It should be noted that for installation of the clamp 203 no one has to enter the slurry tank 102 and all aspects of the installation can be done while an installer is positioned on the slatted floor 103.

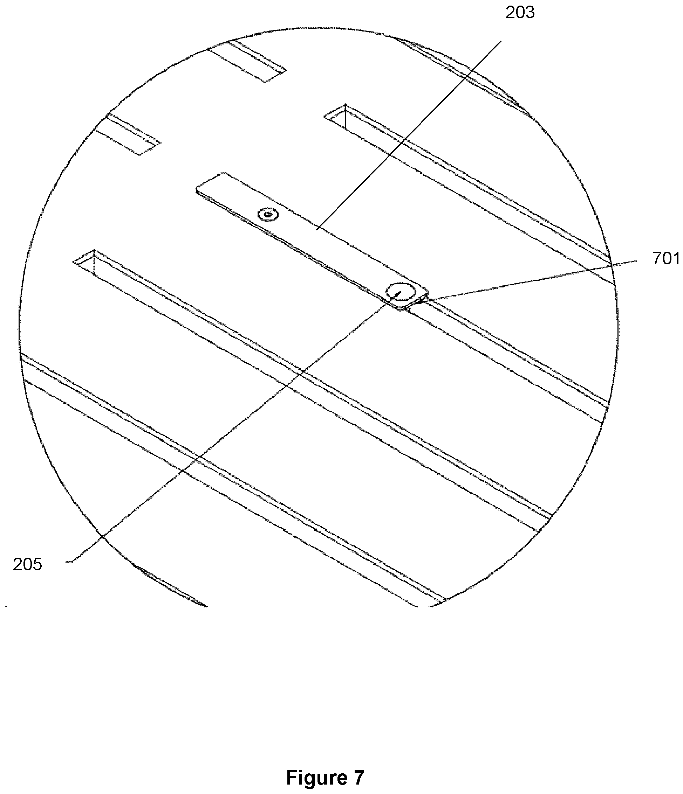

Fig. 7 shows a view of the clamp 203 in accordance with the present teachings inserted between two opposed slats. The non-metallic window 205 may be a plastic/polycarbonate window fixed into an opening in the clamp 203. The non-metallic window 205 is configured to allow a signal to pass between the reference object 701 and the robotic unit. The reference object 701 is positioned directly underneath the non-metallic window to protect it from animal excrement, urine and physical damage. The end of the air inlet (or quick release coupling) is positioned directly below the reference object 701. Each reference object is assigned a unique identifier code/number. Any known means may be used to provide the robotic unit with a transceiver unit to read the unique identifier code/number through the non-metallic window 205. Having read the unique identifier code/number the robot unit can acknowledge the location of the clamp 203 and identify the identifier code/number with respect to the other clamps 203 in the system. The clamp or reference object is also provided with a means to communicate with the transceiver unit of the robotic unit. For example, the clamp may also be provided with a transceiver and/or an RFID tag.

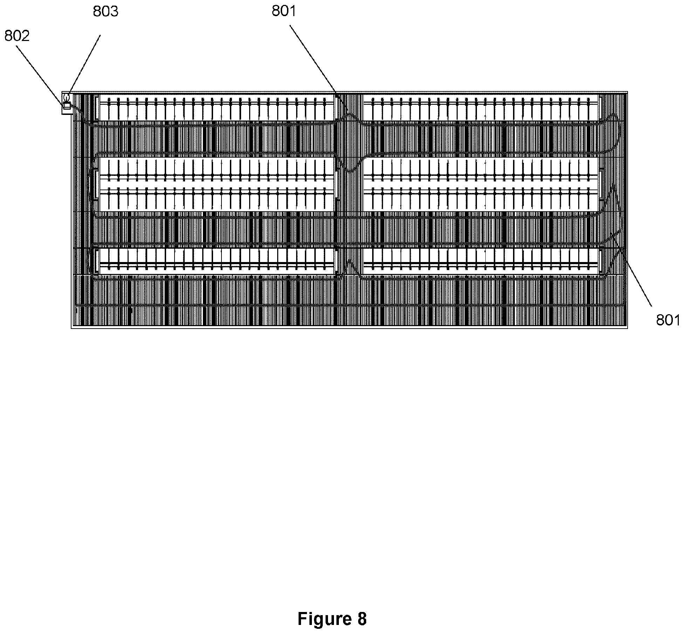

Turning to Fig. 8 this shows a path 801 that the aforementioned robotic unit 802 typically uses to distribute air to each clamp and corresponding pipe. This path can be predefined or machine learning can be used by the robotic unit to ensure air is distributed to each clamp and corresponding pipe in the most efficient manner. The robotic unit includes a built in pressure vessel that can hold between 100 & 600 litres of compressed air. As previously mentioned, this pressure vessel is filled from a larger stationary air tank 803, which typically holds compressed air between 6 and 12 Bar. It will be appreciated by those skilled in the art that the specific sizes of the stationary air tank and the pressure vessel of the robotic unit can be chosen to suit the size of the slurry tank and/or number of clamps and pipes. The robotic unit can make as many trips as is required to provide the desired volume of air to each pipe. Each clamp is provided with air on a scheduled or predefined basis. It will be appreciated that the robotic unit can be programmed to deliver the same volume of air to each clamp/pipe or different volumes of air can be delivered. The robotic unit may be configured to discharge air through a built in variable pressure regulator once it has connected with the air inlet of the clamp (quick connector of the clamp). The flow rate of air along with volume deliver is monitored and controlled by the robotic unit. The robotic unit preferably uses the same connector to connect to the master air tank as is used to connect to the air inlets of the clamps. A different connector can also be used.

The invention is not limited to the embodiments described which can be modified without departing from the scope of the claimed invention.

## Claims

1. A slurry aeration system for a slatted floor slurry tank, comprising:
a clamp for insertion between two slats of the slatted floor, the clamp holding a proximal end of a pipe with a distal end of the pipe extending into the tank, wherein the clamp includes an air inlet connected to the proximal end of the pipe; and
a mobile air tank unit configured to connect to the air inlet and deliver air to the pipe, the pipe being provided with an air outlet at the distal end of the pipe.

2. The slurry agitation system of claim 1, wherein the distal end of the pipe has a T connection providing two air outlets.

3. The slurry agitation system of claim 2, wherein the two air outlets are provided with valve flaps to prevent slurry from entering the pipe.

4. The slurry agitation system of any one of claims 1 to 3, wherein the clamp comprises a support member which is configured to span a distance between the two slats of the slatted floor.

5. The slurry agitation system of claim 4, wherein the clamp further comprises an anchor attached to the clamp using a threaded rod.

6. The slurry agitation system of claim 5, wherein the clamp is configured to move the anchor along the threaded rod to hold the two slats between the support member and the anchor.

7. The slurry agitation system of claim 6, wherein the clamp includes a countersunk Allen bolt on the support member and connected to the threaded rod, wherein rotation of the Allen bold causes the anchor to move along the threaded rod.

8. The slurry agitation system of any one of claims 4 to 7, wherein the support member is a flat plate.

9. The slurry agitation system of any one of claims 1 to 8, wherein the mobile air tank unit is an automated battery powered robotic unit.

10. The slurry agitation system of claim 9, wherein the robotic unit is configured to periodically connect to the air inlet and deliver a predetermined volume of air.

11. The slurry agitation system of claim 9 or 10, wherein the system further includes a charging station at which the robotic unit can recharge.

12. The slurry agitation system of claim 11, wherein the charging station includes a master air tank and the robotic unit is configured to periodically connect to the master air tank for refilling.

13. The slurry agitation system of any one of claims 9 to 12, wherein the system comprises a plurality of clamps and the automated robotic unit is configured to periodically move to each clamp to connect to an air inlet at each clamp and deliver a predetermined volume of air thereto.

14. The slurry agitation system of claim 13, wherein the robotic unit is configured to follow a predetermined route between each of the plurality of clamps.

15. The slurry agitation system of any one of claims 9 to 14, wherein the clamp is provided with a unique identifier that can be read by the robotic unit.
